# EUROPÄISCHE PATENTSCHRIFT

(11) **EP 0 524 520 B1**
(45) Veröffentlichungstag und Bekanntmachung des Hinweises auf die Patenterteilung: **08.10.1997**
(21) Anmeldenummer: 92111880.8
(22) Anmeldetag: 13.07.1992
(51) Int. Cl.: C09B 67/36, D06P 3/32, C09B 67/26, C09B 67/44

(54) **Flüssige Farbstoffzubereitungen**
Liquid dyestuff preparations
Préparations liquides de colorants

(30) Priorität: 24.07.1991 DE 4124451
(43) Veröffentlichungstag der Anmeldung: 27.01.1993
(73) Patentinhaber: BAYER AG, 51368 Leverkusen (DE)
(72) Erfinder: Gerlach, Rainer, Dr., W-5090 Leverkusen (DE); Mennicke, Winfried, Dr., W-5090 Leverkusen (DE); Müllers, Wolfgang, Dr., W-5060 Bergisch Gladbach (DE)

(56) Entgegenhaltungen:
- EP-A- 0 026 886
- EP-A- 0 077 965
- EP-A- 0 169 816
- DE-A- 2 033 989
- FR-A- 2 286 178
- FR-A- 2 289 579
- FR-A- 2 579 607
- US-A- 4 179 267

## Beschreibung

Zum Färben von Leder können sowohl feste als auch flüssige Farbstoffpräparationen verwandt werden. Verlegt man die Lederfärbung in den Bereich der Zurichtung, also in den Bereich der Lederfabrikation, in dem die Gerbung bereits abgeschlossen ist, so kommen fast ausschließlich flüssige Farbstoffpräparationen zur Anwendung, beispielsweise beim Anfärben von wäßrigen und organischen Lederappreturen, beim Druckfärben und am häufigsten beim Spritzfärben von Leder.

Als Flüssigpräparationen kommen bevorzugt konzentrierte Lösungen von anionischen Farbstoffen in Gemischen aus Wasser und mit Wasser mischbaren organischen Lösungsmitteln in Frage. Anionische Farbstoffe, die sich zur Herstellung solcher konzentrierter Stammlösungen eignen, sind insbesondere Säure- und Metallkomplexfarbstoffe. Die bevorzugten Farbstoffe sind dank mindestens einer anionischen Gruppe, beispielsweise einer Carbonsäure-, einer acetylierten Sulfonamid- oder vorzugsweise einer Sulfonsäuregruppe wasserlöslich. Metallkomplexfarbstoffe können, wenn die negative Ladung aller Liganden größer ist als die positive Ladung des zentralen Metallatoms, ebenfalls eine anionische Gruppe darstellen. Neben diesen erwähnten anionischen Gruppen können die Farbstoffe noch nichtionische wasserlöslich machende Gruppen tragen, beispielsweise eine Sulfonamidgruppe, eine am Stickstoff mit einem niederen Alkyl oder niederen Hydroxyalkyl substituierte Sulfonamidgruppe, wie N-Methyl-, N-Ethyl-, N-Propyl- oder N-2-Hydroxyethylsulfonamid, oder eine niedere Alkylsulfonylgruppe, wie Methyl- oder Ethylsulfonyl.

Die Wahl des organischen mit Wasser mischbaren Lösungsmittels ist entscheidend für die Haltbarkeit bzw. Lagerstabilität der konzentrierten Farbstofflösung, für die Penetration des anionischen Farbstoffes in das Ledersubstrat, für die Egalität und die Reibechtheit der Färbung und schließlich für die Trocknung der gefärbten Leder. Im Prinzip eignen sich eine Vielzahl von organischen Lösungsmitteln, wie sie beispielsweise in der DE-A-2 033 989 genannt sind, zur Herstellung solcher Flüssigformulierungen.

Wegen ihrer hohen Anwendungsbreite werden häufig Alkoxyalkohole als Lösungsmittel empfohlen, so in der DE-A-1 719 396. Gegenstand der EP-A-77 965 ist ein Verfahren zur Herstellung von Lösungen der Lithiumsalze von Metallkomplexfarbstoffen, wobei ebenfalls vorzugsweise Alkoxyalkohole als Lösungsmittel verwendet werden. Gemäß EP-A-169 816 werden die Monoalkylether von Propylen- und Butylenglykol zur Herstellung anionischer Farbstofflösungen eingesetzt. Aus arbeitshygienischen Gründen (vgl. J. E. Hamlin, Polym. Paint Colour J. 174 (4125), S. 568 (1984) und B.D. Hardin: Reproductive Toxicity of the Glycol Ethers, Toxicology, 27 (1983) S. 91-102) sind die Monoalkylether des Propylen- und Butylenglykols denen des Ethylenglykols vorzuziehen.

Die US-PS 4 179 267 betrifft Lösungen anionischer Metall-freier Farbstoffe in Mischungen aus aprotischen Lösungsmitteln und wassermischbaren Glykolen oder Glykolethern und gegebenenfalls Wasser. Bevorzugte aprotische Lösungsmittel sind Dimethylsulfoxid, N-Methylpyrolidon, Tetramethylharnstoff und deren Mischungen. Die offenbarten Glykolether umfassen unsere Alkoxyalkohole I nicht. Eine besondere Wirkung einer Kombination aprotischer Lösungsmittel und unserer Alkoxyalkohole I konnte daher durch die US-PS 4 179 267 auch nicht nahegelegt werden.

Mit Monoalkylethern des Ethylen- und Propylenglykols lassen sich im allgemeinen konzentrierte lagerstabile Stammlösungen von anionischen Farbstoffen herstellen. Es zeigte sich aber, daß in einigen Fällen derartige Lösungen beim Austragen auf organische und in vermehrten Maße auf wäßrige Appreturen nicht stabil sind. Es kommt dabei zu Farbstoffaggregationen, zu Verklebungen und Verklumpungen, die sich nach Versprühen auf Leder durch eine fleckige, eventuell mit Schlieren und Stippen versehene Färbung bemerkbar machen.

Es wurde nun überraschend gefunden, daß sich durch Zusatz bestimmter cyclischer Ester und Amide zu den Stammlösungen derartige Nachteile vermeiden lassen.

Die vorliegende Erfindung betrifft daher stabile, hochkonzentrierte, mit Wasser in jedem Verhältnis mischbare Farbstofflösungen, welche enthalten:
5 bis 30 Gew.-Teile, insbesondere 12 bis 23 Gew.-Teile eines oder mehrerer ionogener metallfreier Azofarbstoffe und/oder metallhaltiger Azo- und/oder Azomethinfarbstoffe 15 bis 80 Gew.-Teile, insbesondere 20 bis 60 Gew.-Teile eines oder mehrerer Alkoxyalkohole der Formel (I)

R-O-(-A-O-)ₙ-H (I)

worin
- R: ein geradkettiges oder verzweigtes C₁-C₄-Alkyl,
- A: ein geradkettiges oder verzweigtes C₃-Alkylen und
- n: 1, 2 oder 3 bedeuten
6 bis 40 Gew.-Teile, vorzugsweise 10 bis 35 Gew.-Teile, insbesondere 13 bis 25 Gew.-Teile eines Lactons, Lactams oder cyclischen Harnstoffs oder deren Gemische und
5 bis 50 Gew.-Teile Wasser.

In einer bevorzugten Ausführungsform besteht die Zusammensetzung im wesentlichen aus diesen Komponenten.

Bei den erfindungsgemäß zu verwendenden Farbstoffen handelt es sich im allgemeinen um saure Azofarbstoffe und vorzugsweise Metallkomplexfarbstoffe, sei es um sulfogruppenfreie Metallkomplexfarbstoffe oder solche mit einer Sulfogruppe, wobei die metallfreien Azofarbstoffe und die den Metallkomplexfarbstoffen zugrundeliegenden Azofarbstoffe hauptsächlich der Reihe Benzolazobenzol, Benzolazonaphthalin, Naphthalinazonaphthalin, Benzolazopyrazolon, Benzolazoacetessigamid oder Benzolazoacetonylbenzthiazol angehören.

Als Metallkomplexe kommen die 1:1-Kupfer, -Nickel- und/oder -Chromkomplexe, vorzugsweise aber die 1:2-Chrom-, -Kobalt- und/oder -Eisenkomplexe von Azo-, Disazo-, Azomethin- oder Azoazomethinfarbstoffen in Frage, wobei bei den 1:2-Metallkomplexen diese Farbstoffe gleich oder verschieden sein können und ein Farbstoffligand ein Azo- und der andere ein Azomethin- oder Azoazomethinfarbstoff sein kann. Derartige unsymmetrische 1:2-Metallkomplexfarbstoffe sind beispielsweise in den Patentschriften DE-AS 1 012 007, DE-A-3 133 569, EP-A-66 230 und EP-A 72 501 beschrieben.

Besonders bevorzugt sind symmetrische 1:2 Metallkomplex-Azofarbstoffe des Chroms und Cobalts mit wenigstens einer Sulfonamidgruppe und/oder unsymmetrische 1:2 Metallkomplexfarbstoffe mit einer Sulfonsäuregruppe und/oder einer Sulfonamidgruppe.

Zur Herstellung der erfindungsgemäßen Farbstofflösungen verwendet man die obengenannten Farbstoffe vorzugsweise in Form ihrer Metallsalze, wie sie bei der Synthese anfallen, beispielsweise in Form der Alkalisalze , wie Lithium-, Natrium- und/oder Kalium- und/oder in Form der gegebenenfalls durch niederes alkyl- oder hydroxyalkylsubstituierten Ammoniumsalze. Im Falle der metallfreien Säurefarbstoffe sind die Natrium- und im Falle der Metallkomplexfarbstoffe die Lithiumsalze bevorzugt.

Die Herstellung der an sich bekannten Farbstoffe erfolgt nach bekannten Methoden. Ein vorteilhaftes sich auf Metallkomplexfarbstoffe beziehendes Verfahren ist in der DE-A-2 443 483 beschrieben, bei dem beispielsweise ein metallfreier Farbstoff in Gegenwart des Lösungsmittels und eines alkalisch wirksamen Lithiumsalzes an einen 1:1-Chromkomplex angelagert wird und dabei gleichzeitig die konzentrierte Lösung des Lithiumsalzes eines 1:2-Chromkomplexfarbstoffes entsteht.

Ein allgemeiner Zugang zu den erfindungsgemäßen Lösungen besteht darin, daß der Farbstoff in pasten- oder pulverform, vorzugsweise der getrocknete Farbstoff, in einem Alkoxyalkohol der Formel (I) gegebenenfalls unter Erwärmen auf 40-90°C, z.B. etwa 70°C und unter Zusatz von möglichst wenig Wasser verrührt wird, bis er vollständig gelöst ist, die ungelösten Salze durch Filtration abgetrennt werden, und das Filtrat mit einer der obengenannten cyclischen Verbindungen versetzt und mit Wasser auf die gewünschte Farbstärke eingestellt wird. Die Entsalzung kann aber auch an der feuchten Farbstoffpaste oder wäßrigen Farbstofflösung durch bekannte Membrantrennverfahren vorgenommen werden, beispielsweise durch eine Ultra- oder Hyperfiltration.

Als Lösungsmittel der Formel (I) seien beispielsweise genannt: 1-Methoxy-2-propanol, 2-Methoxy-1-propanol, 1-Ethoxy-2-propanol, 2-Ethoxy-1-propanol, 1-Propoxy-2-propanol, 2-Propoxy-1-propanol, 1-iso-Propoxy-2-propanol, 2-iso-Propoxy-1-propanol, Dipropylenglykolmonomethylether, Dipropylenglykolmonoethylether, Tripropylenglykolmonomethylether oder Tripropylenglykolmonoethylether.

Die Herstellung der von Mono-, Di- und Tripropylenglykol abgeleiteten Mono-C₁-C₄-alkylether erfolgt im allgemeinen durch Anlagerung von 1 Mol C₁-C₄-Alkohol an 1, 2 oder 3 Mol Propylenoxid (PO), wobei neben den Alkoxypropanolen mit sekundärer OH-Gruppe in geringem Maße auch die isomeren primären Alkohole gebildet werden, etwa nach dem folgenden Schema:

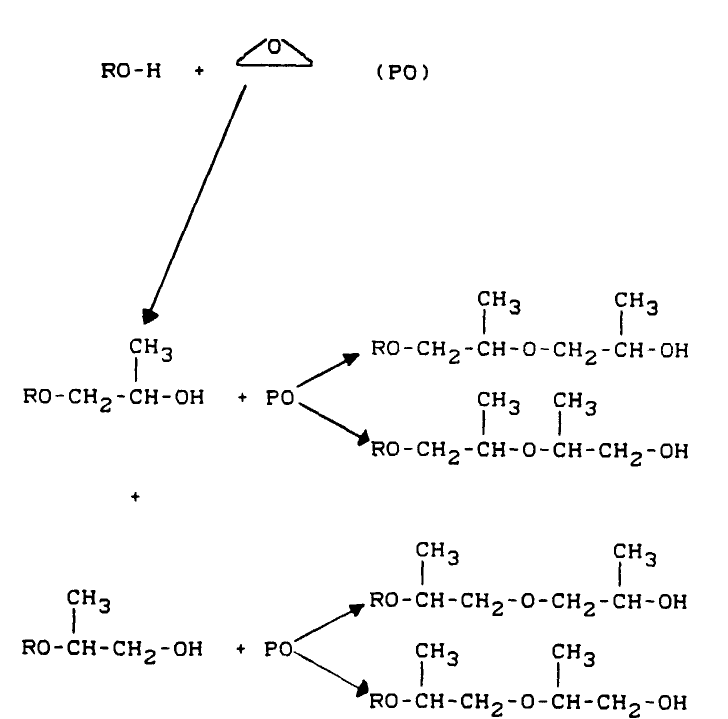

Auch solche synthesebedingten zwangsläufig anfallenden Gemische eignen sich zur Herstellung der erfindungsgemäßen Flüssigformulierungen. Von den physikalischen Eigenschaften her eignen sich als Lösungsmittel besonders gut 1-Methoxy-2-propanol und 1-Ethoxy-2-propanol.

Vertreter aus der Reihe der Lactone, Lactame und cyclischen Harnstoffen sind beispielsweise 4-Butyrolacton, Pyrrolidon, 6-Caprolactam und 1,3-Dimethyl-2-imidazolidinon.

Von besonderem Wert sind ε-Caprolactam, N-Methylpyrrolidon und N-Alkyl-ε-caprolactam z.B. N-Methyl- und/oder N-Ethyl-ε-caprolactam. Bevorzugt sind die beiden letzteren Mittel. Bei Verwendung dieser festen oder schwerflüchtigen Verbindungen können die üblichen Trocknungstechniken beibehalten werden, da überraschenderweise keine Spuren in Form eines gegebenenfalls klebrigen Rückstandes oder Filmes auftreten. Verbessert werden dagegen deutlich die Egalität bei der Effektgebung, d.h. beim Aufsprühen der mit der Farbstofflösung versetzten Appretur. Je nach Farbton können auch eine höhere Brillanz bzw. Farbtiefe beobachtet werden.

Die flüssigen Farbstoff-Zubereitungen enthalten vorzugsweise wenigstens einen Farbstoff der folgenden Formel:

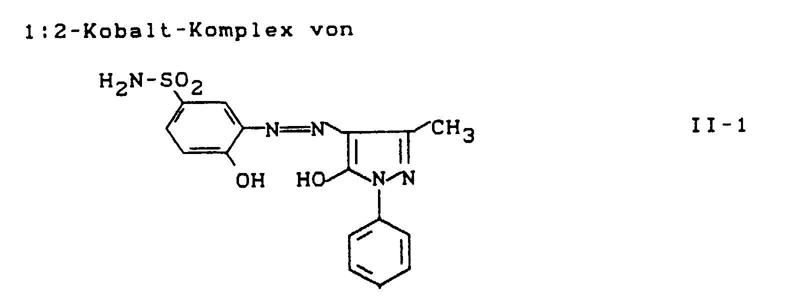

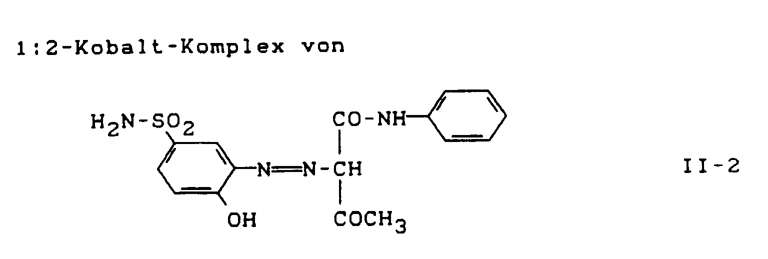

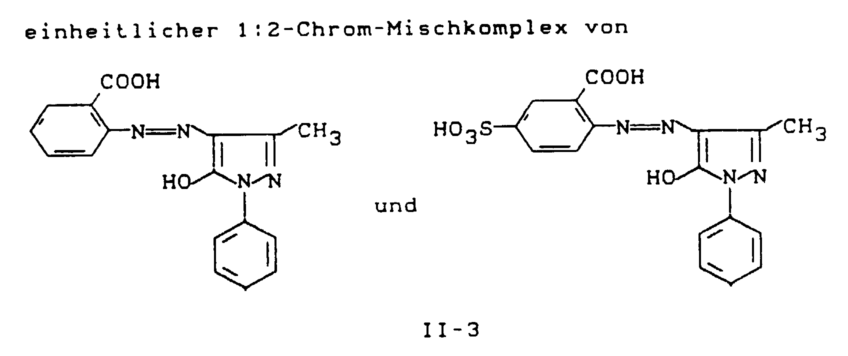

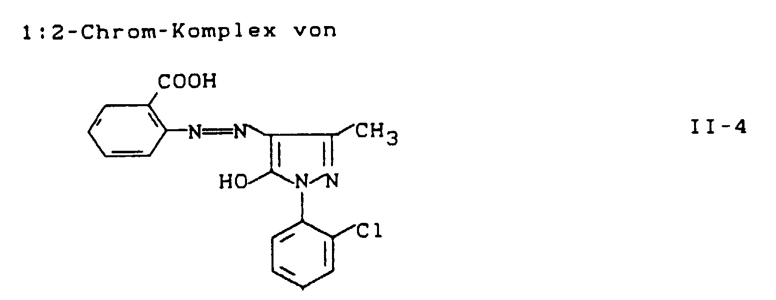

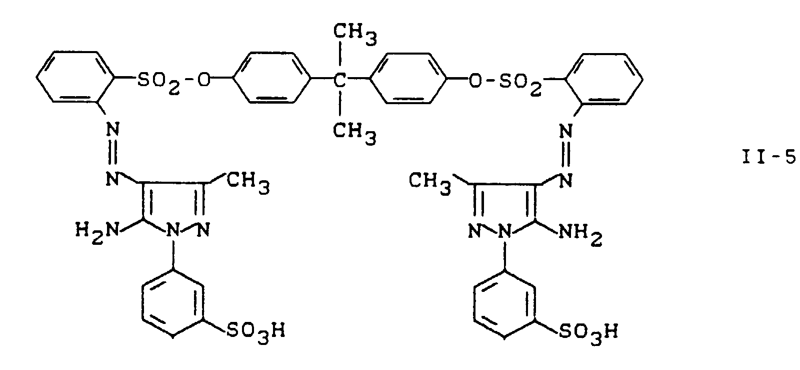

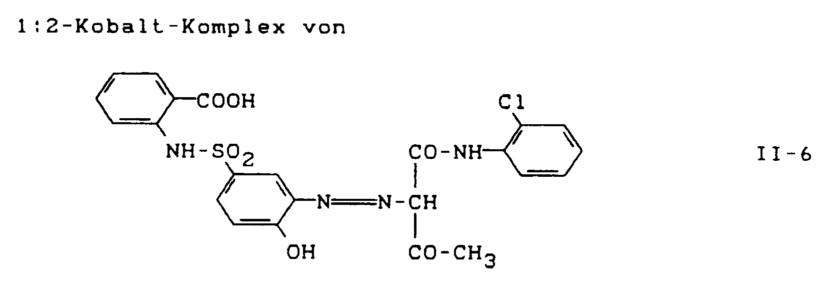

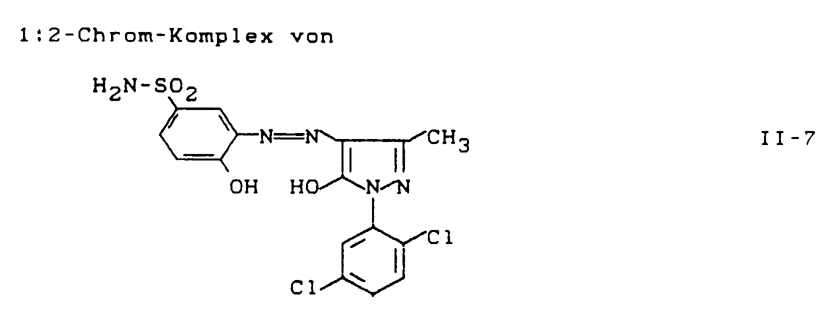

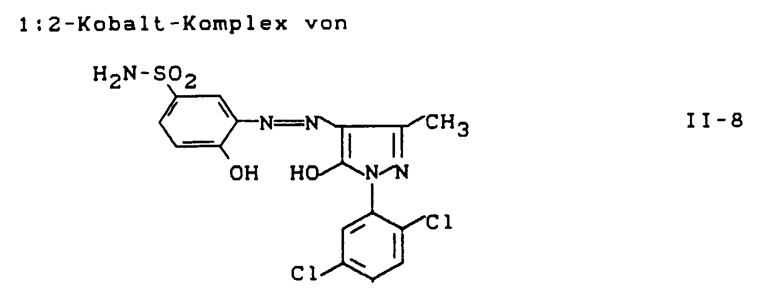

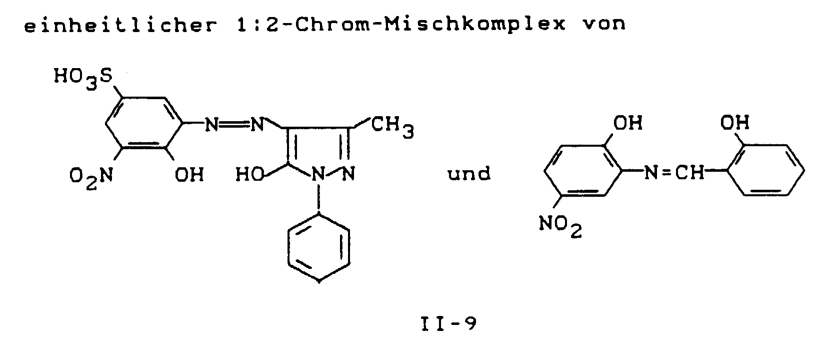

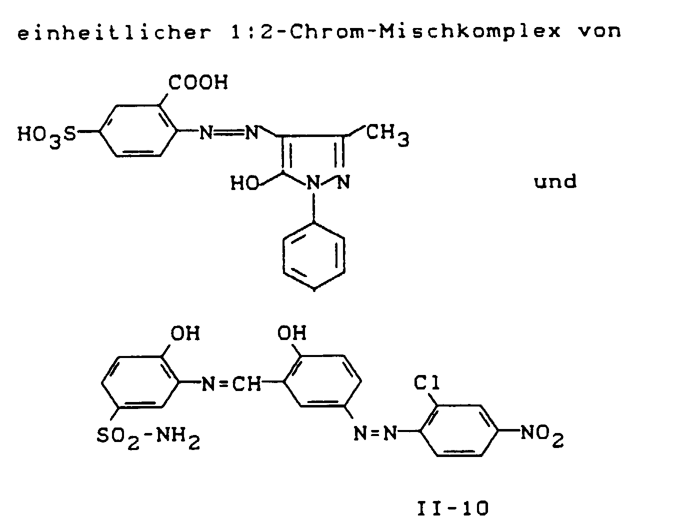

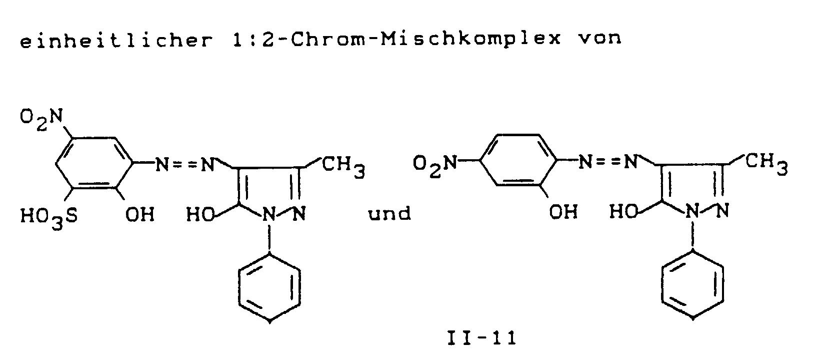

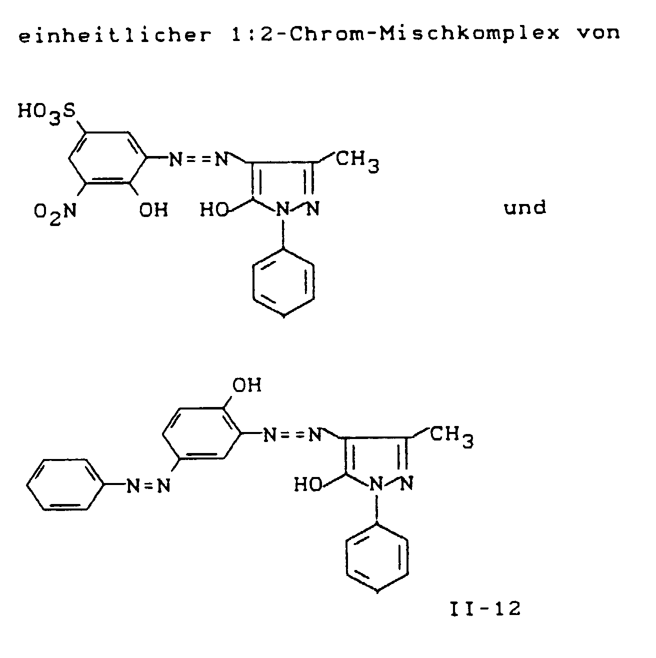

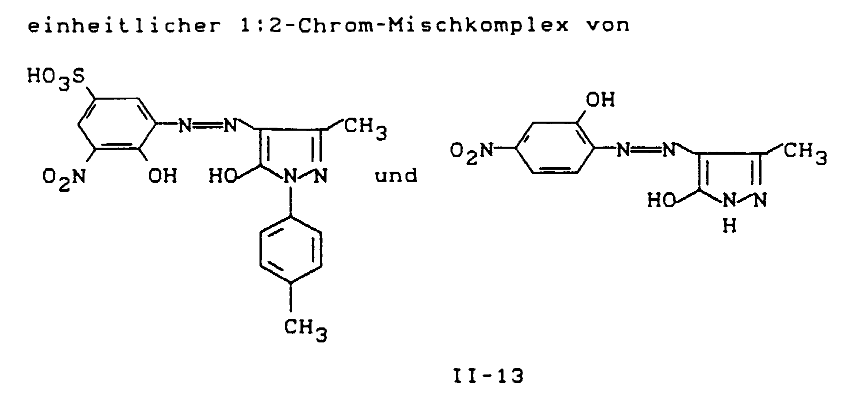

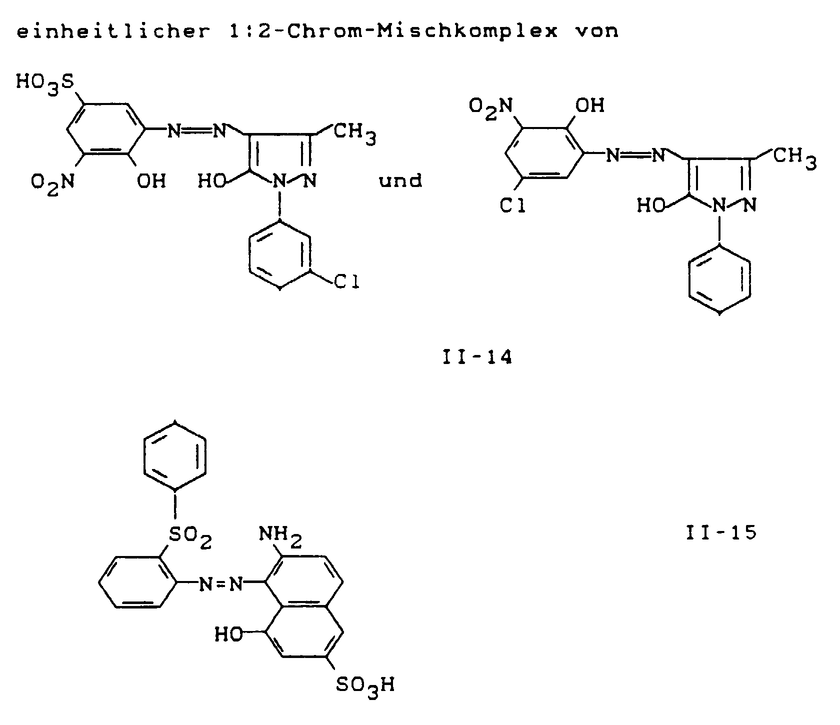

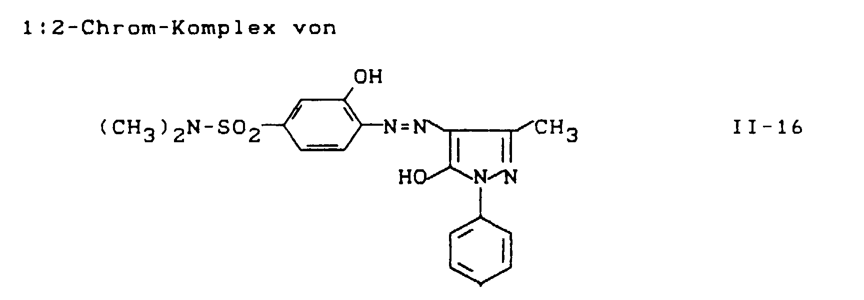

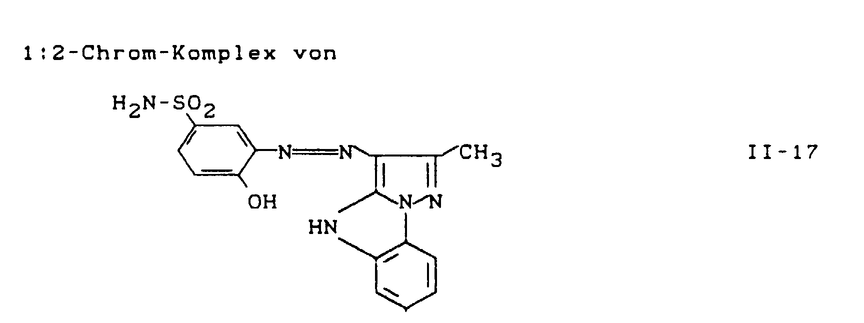

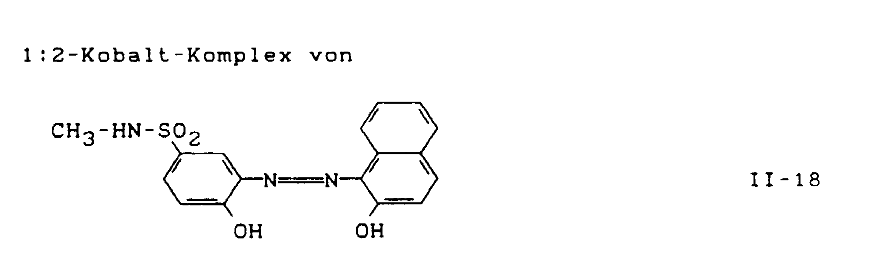

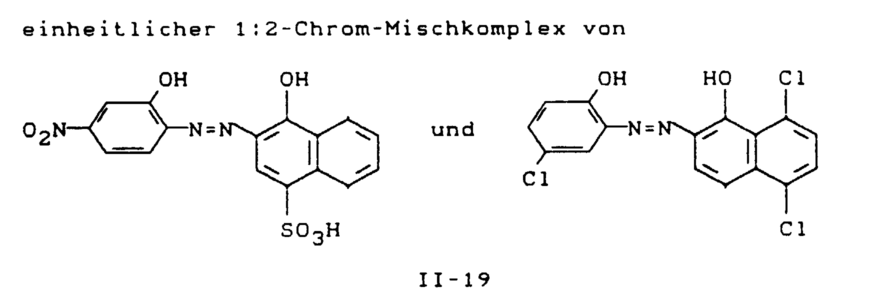

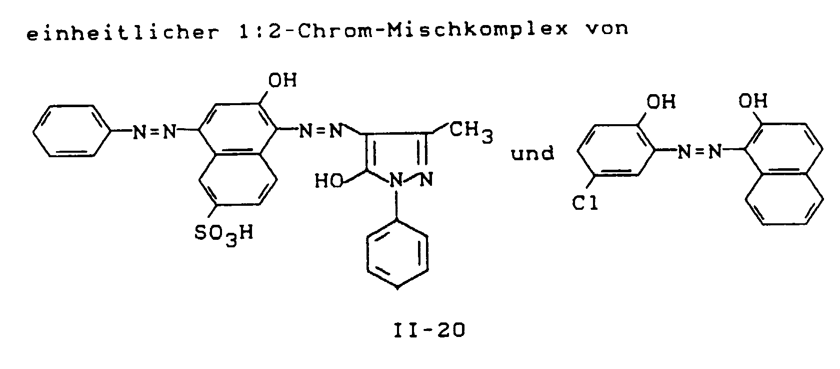

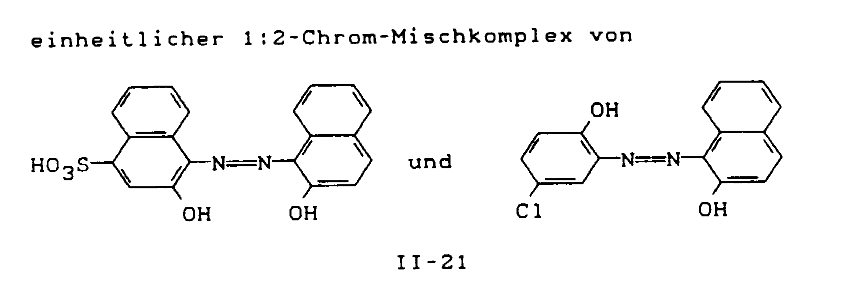

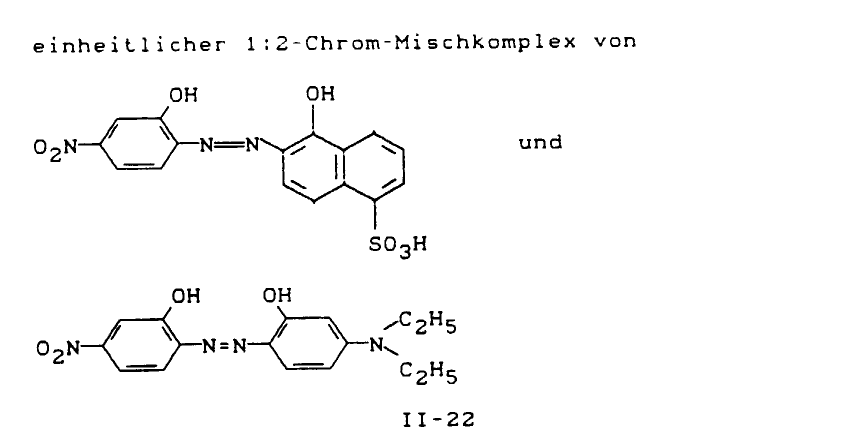

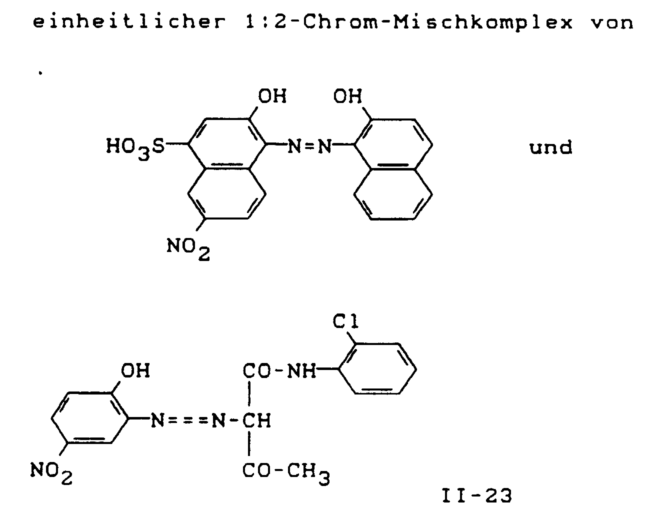

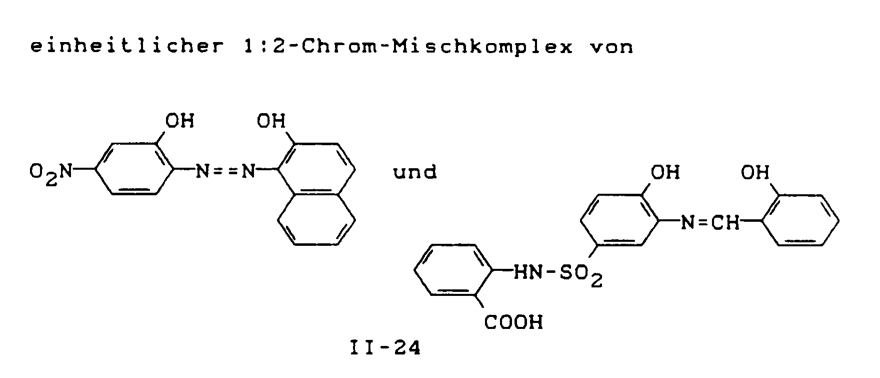

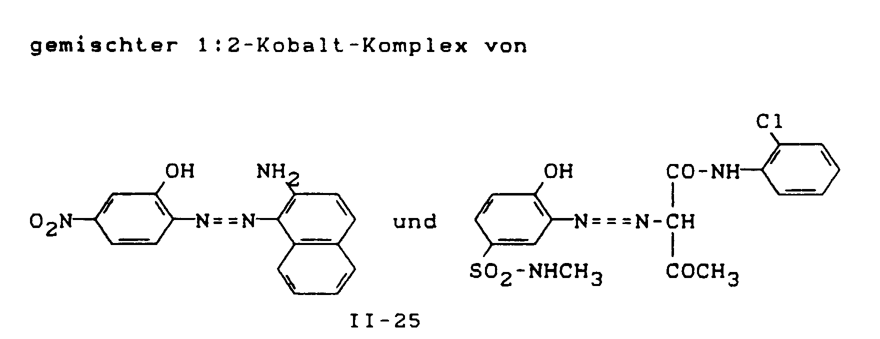

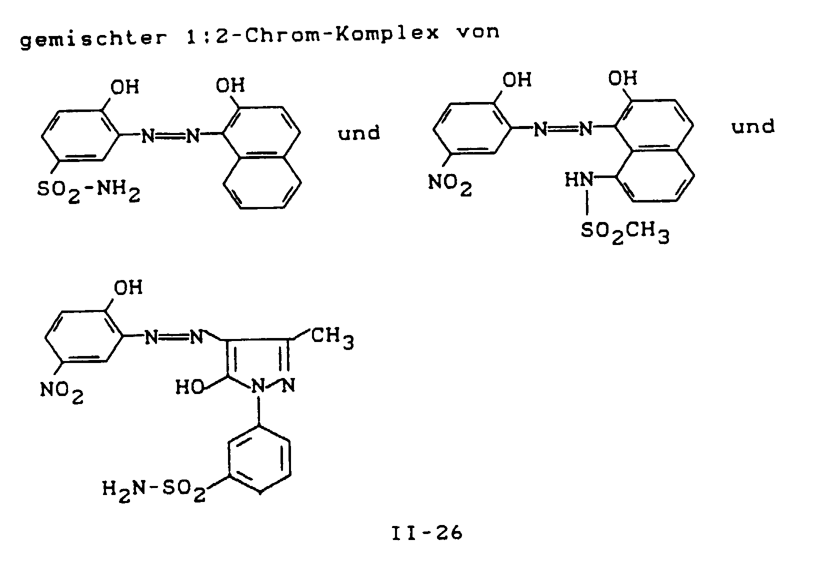

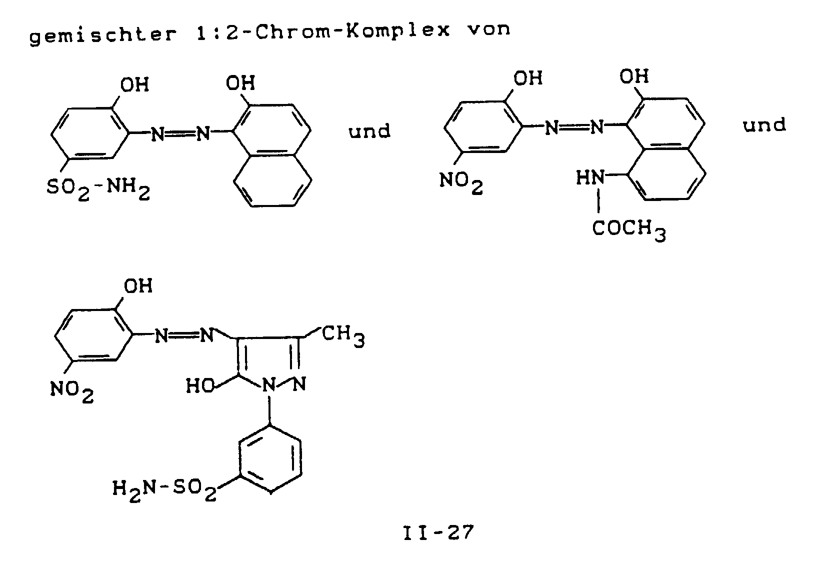

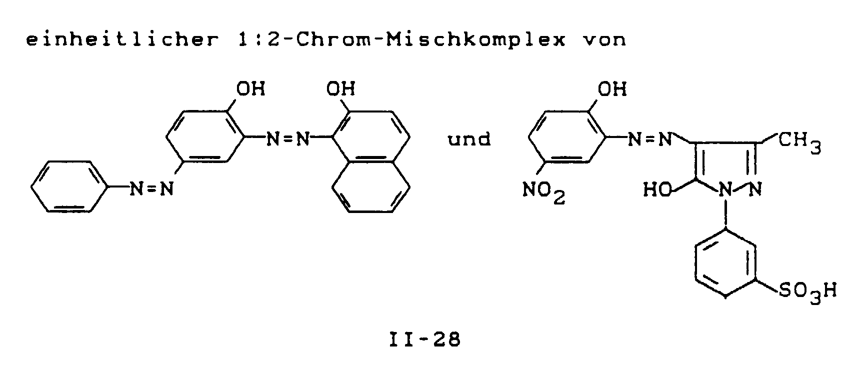

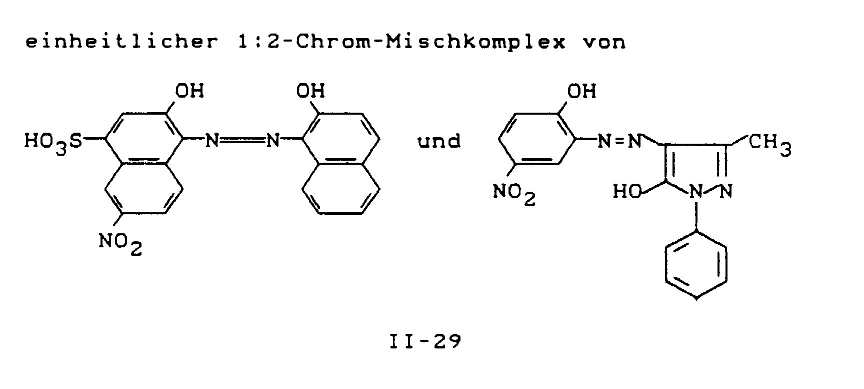

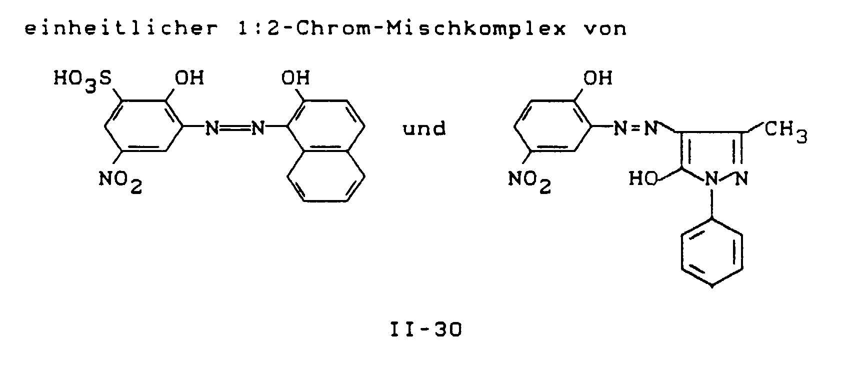

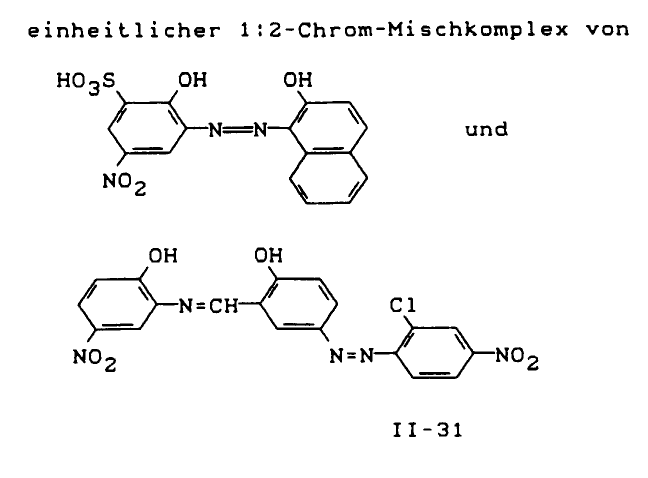

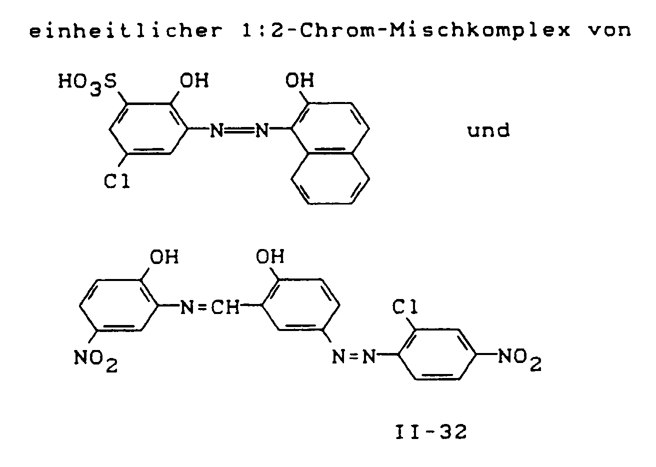

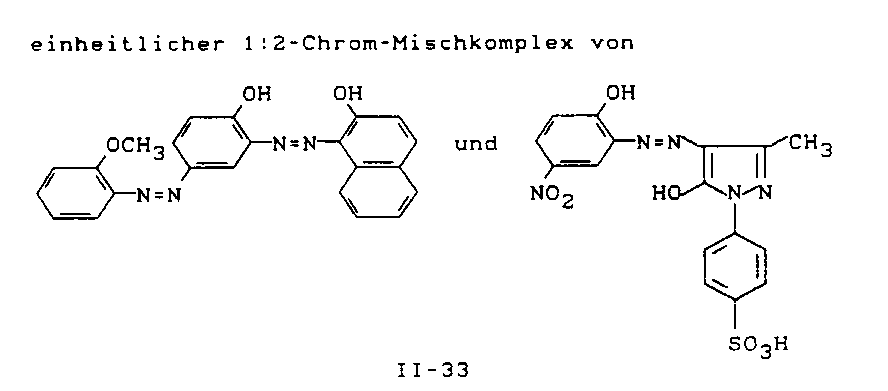

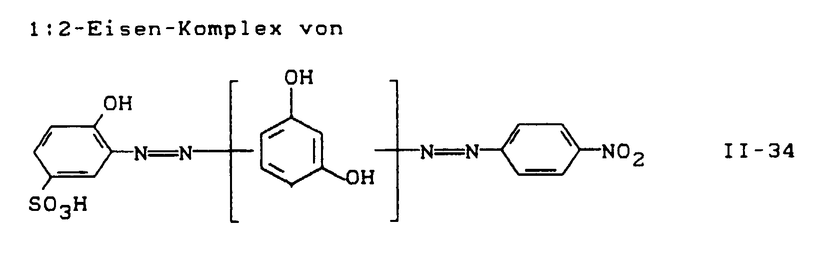

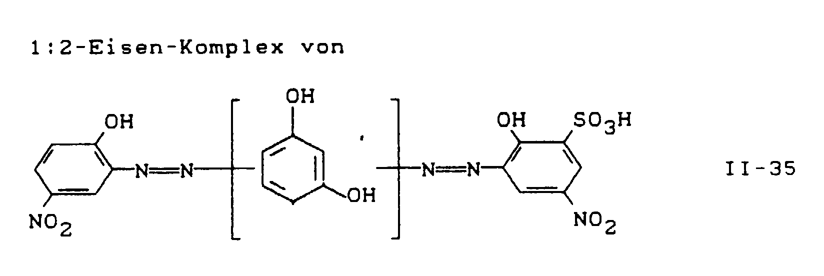

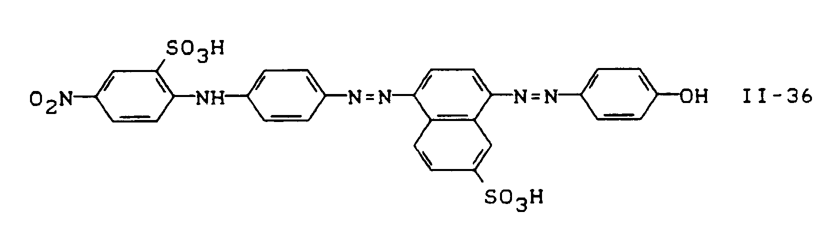

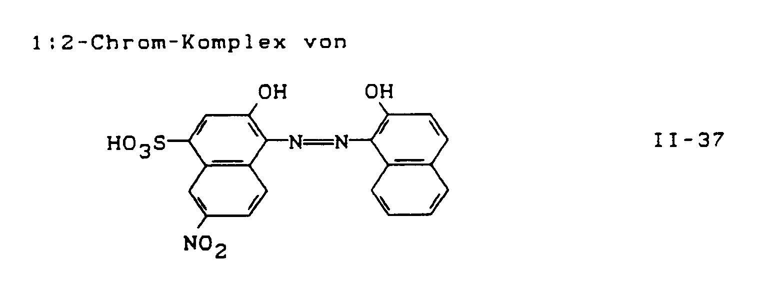

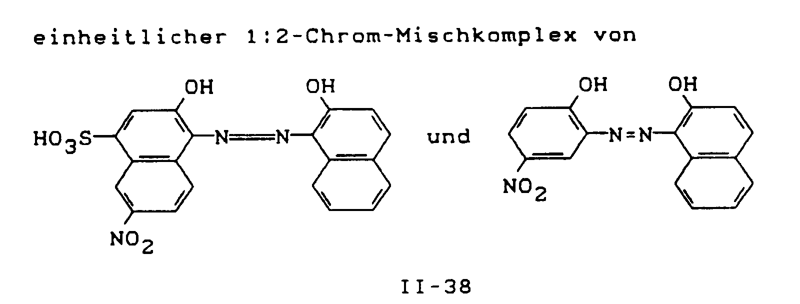

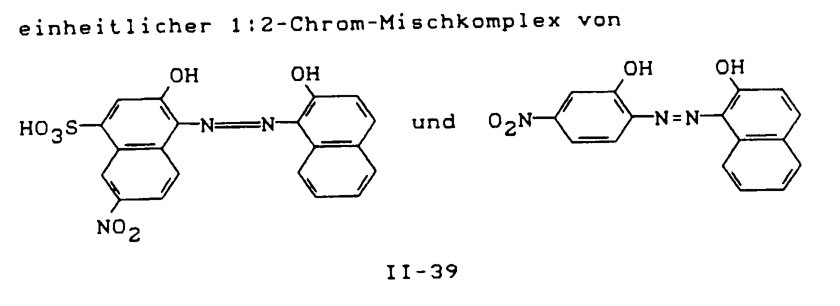

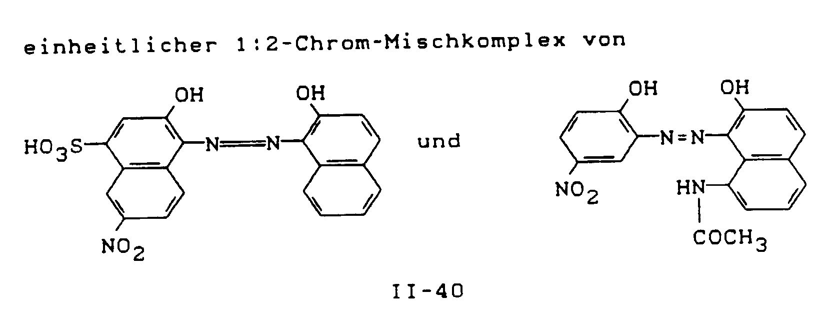

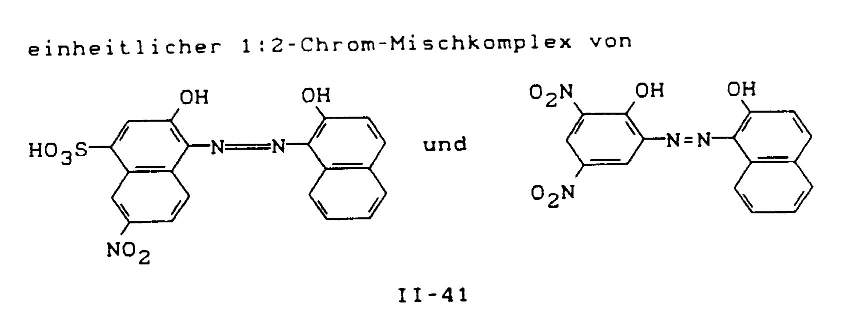

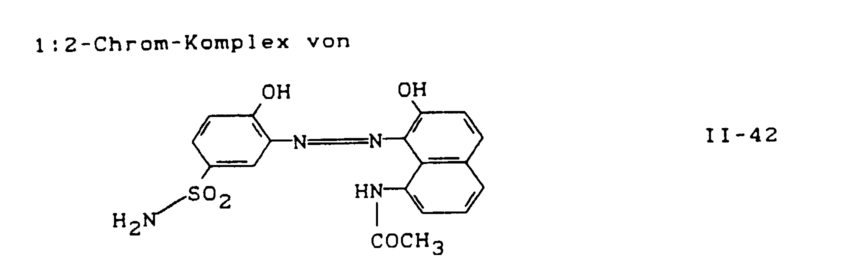

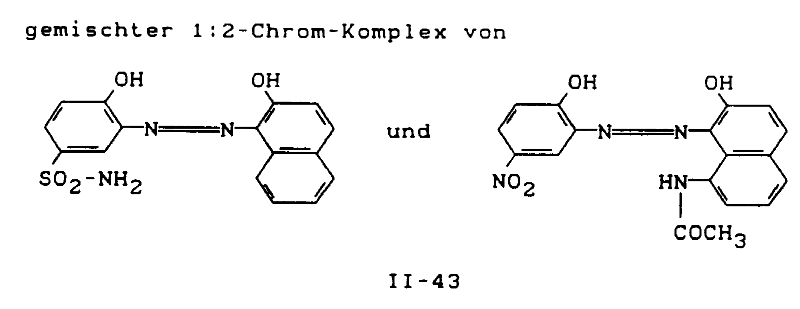

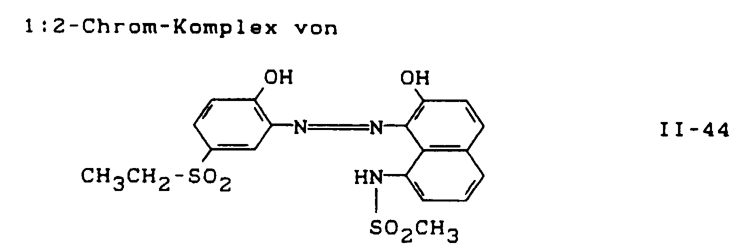

Als Appreturen für das Finish von Leder, die mit den erfindungsgemäßen Flüssigformulierungen verträglich sind, kommen wäßrige Polyurethan- und Polyacrylat-Dispersionen, wäßrige und organische Nitrolack- und Acetobutyrat-Emulsionen und gegebenenfalls weitere Emulsionen auf Kaseinbasis in Frage.

Die erfindungsgemäßen konzentrierten Farbstofflösungen können in geringer Menge noch weitere übliche Zusätze, wie Emulgatoren, Dispergiermittel, Entschäumer, Netzmittel u.a. enthalten. Sie können zur Herstellung von Spritzflotten, farbigen Lederappreturen und wäßrigen Färbebädern verwandt werden und eignen sich somit zum Färben verschiedener Materialien, insbesondere von stickstoff- und hydroxylgruppenhaltigen Materialien, wie Polyurethan- und Polyamidfasern, Wolle, Seide und Leder. Bevorzugtes Anwendungsgebiet ist das Färben von Leder nach verschiedenen Applikationen, sei es das Färben aus wäßriger Färbeflotte im Faß, das Färben mit einer Durchlaufmaschine oder das Spritzfärben mit und ohne Lederappretur.

### Beispiel 1

200,5 g Monoazofarbstoff aus diazotiertem 2-Amino-5-dimethylaminosulfonylphenol und 1-Phenyl-3-methyl-5-pyrazolon werden in 610 g 1-Ethoxy-2-propanol zu einer homogenen Suspension verrührt. Man fügt basisches Chromacetat, welches 13 g Chrom enthält, und 21 g LiOH·H₂O hinzu, erwärmt das Ganze im Verlauf von etwa 1 Stunde auf 90°C und hält dabei den pH durch Zugabe von weiterem LiOH·H₂O, insgesamt etwa 11 g, im Bereich von 5,5 bis 6,5. Sobald der pH konstant bleibt, erhöht man die Temperatur und kocht zwei Stunden unter Rückfluß, bis sich der Farbstoff vollständig in den 1:2-Chromkomplex umgewandelt hat. Nach Abkühlen auf Raumtemperatur werden die bei der Reaktion entstandenen und ausgefallenen Salze durch Filtration abgetrennt.

Versetzt man das Filtrat mit 305 g N-Methyl-ε-Caprolactam und 200 g destilliertem Wasser, so erhält man eine stabile scharlachrote Farbstoffpräparation, aus der bei längerem Stehen auch bei Temperaturen unter dem Gefrierpunkt und beim Vermischen mit Zurichtrezepturen kein 1:2-Chromkomplexfarbstoff ausgeschieden wird.

Zu Präparationen dieses Farbstoffes mit ähnlichen Eigenschaften gelangt man, wenn man anstelle von 1-Ethoxy-2-propanol einen anderen Alkoxyalkohol verwendet, beispielsweise 1-Methoxy-2-propanol, Ethylenglykolmonomethylether oder Ethylenglykolmonoethylether, oder wenn man N-Methyl-ε-Caprolactam gegen N-Ethyl-ε-Caprolactam, N-Methylpyrrolidon oder 1,3-Dimethyl-2-imidazolidinon austauscht.

### Beispiel 2

194 g der 1:2-Kobaltkomplexverbindung von 1-(2'-Hydroxy-5'-methylaminosulfonylphenylazo)-2-naphthol werden in Form des Lithiumsalzes in ein Gemisch von 765 g 1-Ethoxy-2-propanol, 383 g N-Methyl-ε-Caprolactam und 320 g destilliertem Wasser eingetragen und unter Verrühren im Verlauf von etwa einer Stunde auf 60°C erwärmt. Es entsteht eine bordofarbene Farbstoffpärparation, die keine ungelösten Salze mehr enthält. Die Lösung erfährt auch bei längerem Stehen bei Raumtemperatur oder niedrigeren Temperaturen keine änderung und kann ohne Ausfällung in wäßrigen Zuricht-Appreturen eingearbeitet werden.

### Beispiel 3

171,5 g Monoazofarbstoff aus diazotiertem 2-Aminophenol-4-sulfonamid und 2-Naphthol und 183 g Monoazofarbstoff aus diazotiertem 4-Nitro-2-aminophenol und 8-Acetamino-2-naphthol werden zusammen mit basischem Chromacetat, welches 26 g Chrom enthält, in 745 g 1-Ethoxy-2-propanol zu einer einheitlichen Suspension verrührt. Man setzt 42 g LiOH·H₂O zu, erwärmt das Gemisch innerhalb etwa einer Stunde auf 80°C und hält den pH durch Zugabe von weiteren 20 bis 25 g LiOH·H₂O bei 5-6. Nach ca. einer Stunde bei 80°C bleibt der pH konstant. Die Temperatur wird nun auf 100°C erhöht und etwa 2 Stunden auf dieser Höhe gehalten, bis die beiden Ausgangsfarbstoffe abreagiert sind. Man läßt die Lösung der 1:2-Metallkomplexfarbstoffe auf Raumtemperatur abkühlen und saugt die ungelösten Elektrolyte ab. Das Filtrat wird anschließend mit 372 g N-Methyl-ε-Caprolactam und 360 g destilliertem Wasser versetzt. Man erhält so eine schwarze Farbstoffpräparation, welche sich durch eine hohe Lagerstabilität und eine gute Verträglichkeit mit Zuricht-Appreturen auszeichnet.

### Beispiele 4 bis 20

Ähnlich stabile und mit wäßrigen Zuricht-Appreturen gut mischbare Präparationen lassen sich unter Verwendung von 1-Ethoxy-2-propanol, N-Methyl-ε-Caprolactam und destilliertem Wasser auch aus anderen metallfreien oder metallhaltigen Farbstoffen gewinnen. Die folgende Tabelle gibt die Zusammensetzung solcher Präparationen in Gew.-% an.

| Beispiel Nr. | Farbstoff der Formel | 1-Ethoxy-2-propanol | N-Methyl-ε-Caprolactam | Wasser |
|---|---|---|---|---|
| 4 | II-5 | 50 | 10 | 25 |
| | 15 | | | |
| 5 | II-2 | 42 | 24 | 13 |
| | 21 | | | |
| 6 | II-8 | 35 | 25 | 16 |
| | 24 | | | |
| 7 | II-10 | 45 | 10 | 31 |
| | 14 | | | |
| 8 | II-15 | 25 | 25 | 35 |
| | 15 | | | |
| 9 | II-13 | 48 | 12 | 22 |
| | 18 | | | |
| 10 | II-19 | 42 | 15 | 23 |
| | 20 | | | |
| 11 | II-21 | 42 | 18 | 18 |
| | 22 | | | |
| 12 | II-29 | 55 | 5 | 18 |
| | 22 | | | |
| 13 | II-28 | 52 | 5 | 25 |
| | 18 | | | |
| 14 | II-31 | 55 | 5 | 23 |
| | 17 | | | |
| 15 | II-32 | 55 | 5 | 24 |
| | 16 | | | |
| 16 | II-23 | 38 | 22 | 17 |
| | 23 | | | |
| 17 | II-25 | 37 | 28 | 16 |
| | 19 | | | |
| 18 | II-44 | 36 | 26 | 13 |
| | 25 | | | |
| 19 | II-38+-39 | 50 | 10 | 20 |
| | 20 | | | |

| Beispiel Nr. | Farbstoff der Formel | 1-Ethoxy-2- propanol | N-Methyl-ε-Caprolactam | Wasser |
|---|---|---|---|---|
| 20 | II-38+-40 | 40 | 18 | 17 |
| | 25 | | | |
| 21 | II-38 | 45 | 16 | 21 |
| | 18 | | | |
| 22 | II-41 | 44 | 20 | 19 |
| | 17 | | | |
| 23 | II-38+-41 | 35 | 19 | 17 |
| | 19 | | | |

### Beispiel 21

In die folgenden wäßrigen Zurichtrezepturen aus
- 500 ml Wasser und 500 ml einer Xylol und 2-Propanol enthaltenden Collodium/Polyether-Emulsion
- 600 ml Wasser, 200 ml der gleichen Collodium/Polyether-Emulsion wie oben und 200 ml einer wäßrigen Polyurethan-Dispersion
- 500 ml Wasser und 500 ml einer Butylacetat und Ethylhexylacetat enthaltenden Zellulose-Acetobutyrat-Emulsion
- 600 ml Wasser, 200 ml der gleichen wäßrigen Polyurethan-Dispersion wie oben und 200 ml der gleichen Zellulose-Acetobutyrat-Emulsion wie oben
- 600 ml Wasser, 200 ml der gleichen Zellulose-Acetobutyrat-Emulsion wie oben und 200 ml einer wäßrigen Dispersion eines Acrylat-Mischpolymerisats
- 600 ml Wasser, 200 ml der gleichen Collodium/Polyether-Emulsion wie oben und 200 ml der gleichen wäßrigen Dispersion eines Acrylat-Mischpolymerisats wie oben
werden jeweils 10 g einer Farbstoff-Präparation des Beispiels 1, 2 und 3 eingerührt. Dabei wird in allen Fällen eine gute bis sehr gute Durchmischung mit homogener Phase erzielt.

Enthalten die Präparationen jedoch anstelle von N-Methyl-ε-Caprolactam die gleiche Menge 1-Ethoxy-2-propanol, so nimmt die Anfärbbarkeit dieser Rezepturen deutlich ab; bei Verrühren von Rezeptur mit Farbstoff-Präparation beobachtet man nun in einigen Fällen die Bildung von feinen Flocken bis groben Farbstoff-Stippen, in anderen sogar starke Ausfällungen.

## Patentansprüche

1. Farbstofflösungen enthaltend wenigstens einen Farbstoff und einen Alkohol, dadurch gekennzeichnet, daß enthalten sind
5 bis 30 Gew.-Teile eines oder mehrerer ionogener metallfreier Azofarbstoffe und/oder metallhaltiger Azo- und/oder Azomethinfarbstoffe
15 bis 80 Gew.-Teile eines oder mehrerer Alkoxyalkohole der Formel (I)
R-O-(-A-O-)ₙ-H (I)
worin
R ein geradkettiges oder verzweigtes C₁-C₄-Alkyl,
A ein geradkettiges oder verzweigtes C₃-Alkylen und
n 1, 2 oder 3 bedeuten
6 bis 40 Gew.-Teile eines Lactons, Lactams oder cyclischen Harnstoffs oder deren Gemische und
5 bis 50 Gew.-Teile Wasser.

2. Farbstofflösung nach Anspruch 1, dadurch gekennzeichnet, daß enthalten sind
12 bis 23 Gew.-Teile des Farbstoffs
20 bis 60 Gew.-Teile des Alkoxyalkohols (I)
10 bis 35 Gew.-Teile des Lactons, Lactams oder cyclischen Harnstoffs.

3. Farbstofflösung nach Anspruch 1, dadurch gekennzeichnet, daß wenigstens ein symmetrischer 1:2 Metallkomplex-Azofarbstoff des Chroms oder Cobalts mit wenigstens einer Sulfonamidgruppe und/oder ein unsymmetrischer 1:2 Metallkomplexfarbstoff mit einer Sulfonsäuregruppe und/oder einer Sulfonamidgruppe verwendet wird.

4. Farbstofflösung nach wenigstens einem der vorhergehenden Ansprüche, dadurch gekennzeichnet, daß das Lösungsmittel Ethylenglykolmonoethylether, Diethylenglykolmonomethylether, Diethylenglykolmonoethylether, Diethylenglykolmonobutylether, 1-Methoxy-2-propanol, 2-Methoxy-1-propanol, 1-Ethoxy-2-propanol, 2-Ethoxy-1-propanol, 1-Propoxy-2-propanol, 1-iso-Propoxy-2-propanol, Dipropylenglykolmonomethylether oder Dipropylenglykolmonoethylether ist.

5. Farbstofflösung nach wenigstens einem der vorhergehenden Ansprüche, dadurch gekennzeichnet, daß es sich bei dem Lacton, Lactam oder cyclischen Harnstoff um ε-Caprolactam, N-Methylpyrrolidon und/oder N-Alkylcaprolactam handelt.

6. Farbstofflösung nach wenigstens einem der vorhergehenden Ansprüche, dadurch gekennzeichnet, daß es sich bei dem Lacton, Lactam oder cyclischen Harnstoff um N-Methyl- und/oder N-Ethyl-ε-caprolactam handelt.

7. Verfahren zur Herstellung einer Farbstofflösung gemäß wenigstens einem der vorhergehenden Ansprüche, dadurch gekennzeichnet, daß der Farbstoff in einem Alkoxyalkohol der Formel (I) unter Zusatz von 5 bis 50 Gew.-Teile Wasser gelöst wird, ungelöste Salze abgetrennt werden und das Filtrat mit einem Lacton, Lactam oder cyclischen Harnstoff und Wasser versetzt wird.

8. Verfahren zum Färben von Leder mit einer Flüssigpräparation, dadurch gekennzeichnet, daß eine Flüssigpräparation gemäß wenigstens einem der Ansprüche 1 bis 6 verwendet wird.

## Claims

1. Dyestuff solutions containing at least one dyestuff and one alcohol, characterised in that they contain
5 to 30 parts by weight of one or more ionic metal-free azo dyestuffs and/or metal-containing azo and/or azomethine dyestuffs,
15 to 80 parts by weight of one or more alkoxy alcohols of the formula (I)
R-O-(-A-O-)ₙ-H (I),
in which
R denotes a straight-chain or branched C₁-C₄-alkyl,
A denotes a straight-chain or branched C₃-alkylene and
n denotes 1, 2 or 3,
6 to 40 parts by weight of a lactone, lactam or cyclic urea or mixtures thereof and
5 to 50 parts by weight of water.

2. Dyestuff solution according to Claim 1, characterised in that it contains
12 to 23 parts by weight of the dyestuff
20 to 60 parts by weight of the alkoxy alcohol (I)
10 to 35 parts by weight of the lactone, lactam or cyclic urea.

3. Dyestuff solution according to Claim 1, characterised in that at least one symmetrical 1:2 metal complex azo dyestuff of chromium or cobalt containing at least one sulphonamide group and/or an unsymmetrical 1:2 metal complex dyestuff containing a sulpho group and/or a sulphonamide group is used.

4. Dyestuff solution according to at least one of the preceding claims, characterised in that the solvent is ethylene glycol monoethyl ether, diethylene glycol monomethyl ether, diethylene glycol monoethyl ether, diethylene glycol monobutyl ether, 1-methoxy-2-propanol, 2-methoxy-1-propanol, 1-ethoxy-2-propanol, 2-ethoxy-1-propanol, 1-propoxy-2-propanol, 1-iso-propoxy-2-propanol, dipropylene glycol monomethyl ether or dipropylene glycol monoethyl ether.

5. Dyestuff solution according to at least one of the preceding claims, characterised in that the lactone, lactam or cyclic urea is ε-caprolactam, N-methylpyrrolidone and/or an N-alkylcaprolactam.

6. Dyestuff solution according to at least one of the preceding claims, characterised in that the lactone, lactam or cyclic urea is N-methyl- and/or N-ethyl-ε-caprolactam.

7. Process for the preparation of a dyestuff solution according to at least one of the preceding claims, characterised in that the dyestuff is dissolved in an alkoxy alcohol of the formula (I) with the addition of 5 to 50 parts by weight of water, undissolved salts are separated off, and a lactone, lactam or cyclic urea and water are added to the filtrate.

8. Process for the dyeing of leather with a liquid preparation, characterised in that a liquid preparation according to at least one of Claims 1 to 6 is used.

## Revendications

1. Solutions de colorants contenant au moins un colorant et un alcool, caractérisées en ce qu'elles contiennent
5 à 30 parties en poids d'un ou plusieurs colorants azoïques ionogènes exempts de métaux et/ou colorants azoïques et/ou d'azométhine contenant des métaux,
15 à 80 parties en poids d'un ou plusieurs alcoxyalcools de formule (I)
R-O-(-A-O-)ₙ-H (I)
dans laquelle
R représente un groupe alkyle à chaîne droite ou ramifiée en C₁ à C₄,
A représente un groupe alkylène à chaîne droite ou ramifiée en C₃ et n est égal à 1, 2 ou 3,
6 à 40 parties en poids, de préférence 10 à 35 parties en poids, plus spécialement 13 à 25 parties en poids d'une lactone, d'un lactame ou d'une urée cyclique ou leurs mélanges et
5 à 50 parties en poids d'eau.

2. Solution de colorant selon la revendication 1, caractérisée en ce qu'elle contient
12 à 23 parties en poids du colorant,
20 à 60 parties en poids de l'alcoxyalcool (I),
10 à 35 parties en poids de la lactone, du lactame ou de l'urée cyclique.

3. Solution de colorant selon la revendication 1, caractérisée en ce qu'elle contient au moins un complexe métallique symétrique 1:2 de colorant azoïque et de chrome ou de cobalt portant au moins un groupe sulfonamide et/ou un complexe métallique 1:2 symétrique de colorant portant un groupe acide sulfonique et/ou un groupe sulfonamide.

4. Solution de colorant selon au moins une des revendications qui précèdent, caractérisée en ce que le solvant est l'éther monoéthylique de l'éthylèneglycol, l'éther monométhylique du diéthylèneglycol, l'éther monoéthylique du diéthylèneglycol, l'éther monobutylique du diéthylèneglycol, le 1-méthoxy-2-propanol, le 2-méthoxy-1-propanol, le 1-éthoxy-2-propanol, le 2-éthoxy-1-propanol, le 1-propoxy-2-propanol, le 1-isopropoxy-2-propanol, l'éther monométhylique du dipropylèneglycol ou l'éther monoéthylique du dipropylèneglycol.

5. Solution de colorant selon au moins une des revendications qui précèdent, caractérisée en ce la lactone, le lactame ou l'urée cyclique consistent en l'ε-caprolactame, la N-méthylpyrrolidone et/ou un N-alkylcaprolactame.

6. Solution de colorant selon au moins une des revendications qui précèdent, caractérisée en ce que la lactone, le lactame ou l'urée cyclique consistent en le N-méthyl- et/ou le N-éthyl-ε-caprolactame.

7. Procédé de préparation d'une solution de colorant selon au moins une des revendications qui précèdent, caractérisé en ce que l'on dissout le colorant dans un alcoxyalcool de formule (I) avec adjonction de 5 à 50 parties en poids d'eau, on sépare les sels non dissous et on ajoute au filtrat une lactone, un lactame ou une urée cyclique et de l'eau.

8. Procédé pour teindre le cuir à l'aide d'une composition liquide, caractérisé en ce que l'on utilise une composition liquide selon au moins une des revendications 1 à 6.
